# EUROPEAN PATENT SPECIFICATION

(11) **EP 3 174 165 B1**
(45) Date of publication and mention of the grant of the patent: **12.12.2018**
(21) Application number: 16193010.2
(22) Date of filing: 10.10.2016
(51) Int. Cl.: H01R 13/52, H02G 15/08, H01R 101/00

(54) **CABLE CONNECTOR**
KABELVERBINDER
CONNECTEUR DE CÂBLE

(30) Priority: 30.11.2015 JP 2015233250
(43) Date of publication of application: 31.05.2017
(73) Proprietor: Hitachi Metals, Ltd., Tokyo 108-8224 (JP)
(72) Inventor: SUMI, Yosuke, Tokyo, 108-8224 (JP); AKIMOTO, Katsuya, Tokyo, 108-8224 (JP); CHIWATA, Naofumi, Tokyo, 108-8224 (JP); MURATA, Wataru, Tokyo, 108-8224 (JP); AISHIMA, Yukinori, Tokyo, 108-8224 (JP); OKIKAWA, Hiroshi, Tokyo, 108-8224 (JP)
(74) Representative: Betten & Resch

(56) References cited:
- EP-A1- 0 815 618
- CN-U- 203 645 289
- DE-C1- 4 425 421
- US-A- 3 783 434

## Description

### BACKGROUND OF THE INVENTION

### 1. FIELD OF THE INVENTION

The invention relates to a cable connector.

### 2. DESCRIPTION OF THE RELATED ART

One of conventional cable connectors for connecting a pair of power cables is a cable connector for connecting a main power cable to a jumper cable connecting vehicles (see, e.g., EP-A-0815618, specification).

To provide electrical insulation around a joint between cable conductors exposed from ends of the main power cable and the jumper cable by stepwise stripping, this cable connector is configured such that male and female rubber units and an epoxy-resin insulating component as a cone-shaped member are arranged around the joint and a casing is provided to house these insulating components. These insulating components are arranged such that the cone-shaped member is sandwiched from two sides by the male rubber unit and the female rubber unit and it is configured such that tight contact between the insulating components is provided by operating a lever attached to the casing. In DE 44 25 421 C1 an elastic deformable, sleeve-like insulator for a cable connector is disclosed. In particular, inner and outer shell surfaces have a contact surface for a mechanical and electrical seal, respectively. Between the shell surfaces a first cavity is connected with a second, axially shifted, cavity. Both cavities are sealed to the outside and contain a fluid which creates an overpressure in the first cavity when applying force from the outside.

### SUMMARY OF THE INVENTION

Since the area of a contact surface (or an interfacial surface) between the insulating components is relatively large in the conventional cable connector, the air may not be completely evacuated from the interfacial surface between the insulating components at the time of assembly, and may remain as a void at the interfacial surface.

It is an object of the invention to provide a cable connector that prevents the remaining void at the interfacial surface between the insulating components arranged around the joint.
(1) According to an embodiment of the invention, provided is a cable connector, comprising a plurality of insulating components arranged around a joint between cable conductors exposed from ends of a pair of power cables as connection objects,
wherein the plurality of insulating components comprise a female component comprising a conical inner contact surface located on the inner side, a male component comprising a conical outer contact surface located on the outer side, and an intermediate component that is arranged between the male and female components and comprises an insulating portion comprising an insulating material and a through-hole formed in the center along an axial direction, the insulating portion further comprising a female-side contact surface in contact with the inner contact surface and a male-side contact surface in contact with the outer contact surface, and
wherein the intermediate component is configured such that the male-side contact surface has a smaller area than the female-side contact surface and that a gap formed between the through-hole and the joint/the power cable serves as an air escape path to allow the air to escape from an interfacial surface between the female-side contact surface and the inner contact surface when the female-side contact surface is brought into contact with the inner contact surface of the female component.

In the above embodiment (1), the intermediate component may further comprise a conductive tube arranged inside the insulating portion.

In the above embodiment (1), the female and male components may comprise mainly a rubber, and wherein the insulating material of the intermediate component is harder than the rubber.

### Effects of the invention

According to an embodiment of the invention, a cable connector can be provided that prevents the remaining void at the interfacial surface between the insulating components arranged around the joint.

### BRIEF DESCRIPTION OF THE DRAWINGS

Next, the present invention will be explained in more detail in conjunction with appended drawings, wherein:
**FIG.1** is a schematic cross sectional view showing a configuration example of a cable connector in an embodiment of the present invention;
**FIG.2** is an exploded perspective view showing a main portion of the cable connector shown in **FIG.1****;** and
**FIG.3** is a cross sectional view showing the main portion to explain a process of assembling the cable connector shown in **FIG.1****.**

### DETAILED DESCRIPTION OF THE PREFERRED EMBODIMENTS

An embodiment of the invention will be described below in reference to the drawings. Constituent elements having substantially the same functions are denoted by the same reference numerals in each drawing and the overlapping explanation thereof will be omitted.

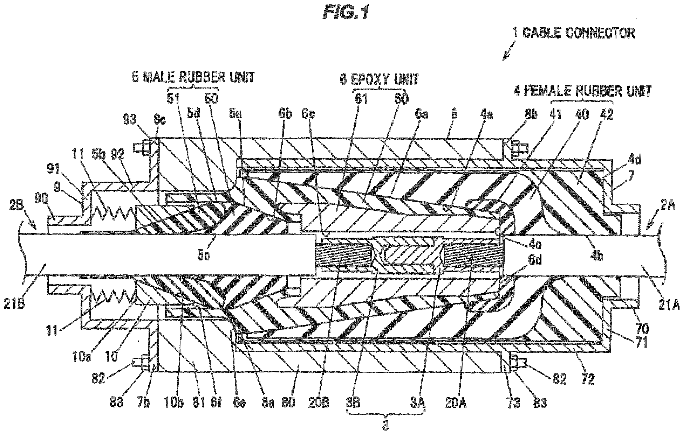

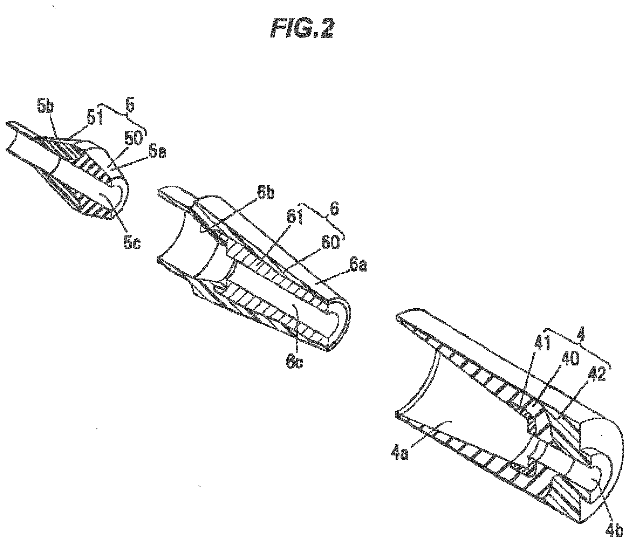

**FIG.1** is a schematic cross sectional view showing a configuration example of a cable connector in an embodiment of the invention. **FIG.2** is an exploded perspective view showing a main portion of the cable connector shown in **FIG.1****.**

A cable connector **1** is configured such that a joint **3** is composed of a pair of conductor joining tubes **3A** and **3B** which are respectively connected to cable conductors **20A** and **20B** exposed from ends of a pair of power cables **2A** and **2B** as connection objects by stepwise stripping, and three insulating components, a female rubber unit **4,** a male rubber unit **5** and an epoxy unit **6,** are arranged around the joint **3** to provide electrical insulation around the joint **3.**

For the purpose of facilitating connection between the pair of power cables **2A** and **2B** and evacuating the air, etc., from between joint surfaces (from an interfacial surface), the insulating components are assembled in a predetermined assembly sequence and also an air escape path is provided in the epoxy unit **6.** The female rubber unit **4** here is an example of the female component. The male rubber unit **5** is an example of the male component. The epoxy unit **6** is an example of the intermediate component.

The cable connector **1** is also provided with a first casing **7,** an intermediate casing **8,** a second casing **9** and a spring member **11.** The first casing **7,** the intermediate casing **8** and the second casing **9** are provided to house the female rubber unit **4,** the male rubber unit **5** and the epoxy unit **6** in a state that the pair of power cables **2A** and **2B** are connected to the pair of conductor joining tubes **3A** and **3B.** The spring member **11** presses the male rubber unit **5** toward the female rubber unit **4** via a pressing member **10.**

The power cable **2A/2B** has the cable conductor **20A/20B** formed of, e.g., a twisted wire on which an inner semi-conductive layer, an insulation layer **21A/21B,** an outer semi-conductive layer, a shield layer, a binding tape layer and a sheath layer are provided in this order.

### Configuration of female rubber unit

The major portion of the female rubber unit **4** is arranged around the power cable **2A.** The female rubber unit **4** is formed mainly of a rubber and has a conical inner contact surface **4a** located on the inner side and a through-hole **4b** formed in the center along an axial direction. In detail, the female rubber unit **4** is provided with an insulating portion **40** formed by molding a rubber and semi-conductive layers **41** and **42** which are formed of a conductive rubber and are arranged on both sides of the insulating portion **40** in an axial direction. The size of the through-hole **4b** is smaller than the outer diameter of the power cable **2A** (in the example shown in **FIG.1****,** the outer diameter of the insulation layer **21A**) so that a void is not formed between the female rubber unit **4** and the power cable **2A.** The female rubber unit **4** also has a bottom surface **4c** which is in contact with an end face **6d** of the epoxy unit **6.** In addition, the female rubber unit **4** has an end face **4d** which is in contact with an inner surface of a vertical wall portion **71** of the first casing **7.**

The insulating portion **40** is formed of, e.g., silicone rubber, ethylene-propylene rubber (EPM) or ethylene propylene diene rubber (EPDM), etc.

The semi-conductive layers **41** and **42** are provided to relax electric field concentration, are formed mainly of a polymer-based material and are formed by, e.g., extrusion molding of a material which is obtained by dispersing conductive powder such as carbon in a rubber such as ethylene-propylene rubber, ethylene-vinyl acetate copolymer (EVA) resin or butyl rubber and thus has conductivity.

### Configuration of male rubber unit

The male rubber unit **5** is arranged around the power cable **2B.** The male rubber unit **5** is formed mainly of a rubber and has a conical outer contact surface **5a** on the conductor joining tube **3B** side, a conical outer contact surface **5b** on the opposite side to the conductor joining tube **3B** and a through-hole **5c** formed in the center along an axial direction. In detail, the male rubber unit **5** is provided with an insulating portion **50** provided on the conductor joining tube **3B** side and a semi-conductive layer **51** which is formed of a conductive rubber and is provided on the opposite side to the conductor joining tube **3B.** The size of the through-hole **5c** is smaller than the outer diameter of the power cable **2B** (in the example shown in **FIG.1****,** the outer diameter of the insulation layer **21B**) so that a void is not formed between the male rubber unit **5** and the power cable **2B.** In addition, the outer diameter of a circumferential surface **5d** at which the male rubber unit **5** has the maximum diameter is preferably smaller in size than an inner peripheral surface **6f** of the epoxy unit **6** (described later).

The insulating portion **50** is formed of, e.g., silicone rubber, ethylene-propylene rubber (EPM) or ethylene propylene diene rubber (EPDM), etc.

The semi-conductive layer **51** is provided to relax electric field concentration, is formed mainly of a polymer-based material and is formed by, e.g., extrusion molding of a material which is obtained by dispersing conductive powder such as carbon in a rubber such as ethylene-propylene rubber, ethylene-vinyl acetate copolymer (EVA) resin or butyl rubber and thus has conductivity.

### Configuration of epoxy unit

The epoxy unit 6 is located between the female rubber unit 4 and the male rubber unit **5** and is arranged around the pair of conductor joining tubes **3A** and **3B.** The epoxy unit **6** has a female-side contact surface **6a** in contact with the inner contact surface **4a** of the female rubber unit **4** and a male-side contact surface **6b** in contact with the outer contact surface **5a** of the male rubber unit **5.** The epoxy unit **6** is provided with an insulating portion **60** and a conductive tube **61.** The insulating portion **60** is formed of a harder insulating material than the rubber used to form the female rubber unit **4** and the male rubber unit **5,** and is formed of, e.g., an epoxy resin. The conductive tube **61** has a through-hole **6c** formed in the center along an axial direction and is arranged inside the insulating portion **60.** The epoxy unit **6** also has the end face **6d** in contact with the bottom surface **4c** of the female rubber unit **4** and an end face **6e** in contact with an end face **8a** of a thick cylindrical portion **81** of the intermediate casing **8** (described later). The conductive tube **61** is formed of, e.g., a metal such as brass or aluminum alloy.

A contact area between the outer contact surface **5a** of the male rubber unit **5** and the male-side contact surface **6b** of the epoxy unit **6** is smaller than that between the inner contact surface **4a** of the female rubber unit **4** and the female-side contact surface **6a** of the epoxy unit **6,** and an inclination angle of the male-side contact surface **6b** with respect to the central axis is greater than an inclination angle of the female-side contact surface **6a** with respect to the central axis.

When the female-side contact surface **6a** of the epoxy unit **6** is brought into contact with the inner contact surface **4a** of the female rubber unit **4** in a state that the outer contact surface **5a** of the male rubber unit **5** is not in contact with the male-side contact surface **6b** of the epoxy unit **6,** a gap formed between the through-hole **6c** of the conductive tube **61** and the joint **3**/the power cable **2B** serves as an air escape path to allow the air to escape from an interfacial surface between the female-side contact surface 6a of the epoxy unit **6** and the inner contact surface **4a** of the female rubber unit **4.**

### Configuration of casing

The first casing **7** is provided with a small diameter cylindrical portion **70,** the vertical wall portion **71** extending outward from one end of the small diameter cylindrical portion **70,** a large diameter cylindrical portion **72** connected to the outer end of the vertical wall portion **71,** and a flange portion **73** formed on the outer surface of the large diameter cylindrical portion **72.** The flange portion **73** has plural attachment holes formed at equal intervals.

The intermediate casing **8** is provided with a thin cylindrical portion **80** and the thick cylindrical portion **81.** Plural bolts **82** are provided to protrude from an end face **8b** of the thin cylindrical portion **80** at positions corresponding to the plural attachment holes formed on the flange portion **73.** Other plural bolts **82** are provided to protrude from an end face **8c** of the thick cylindrical portion **81** at positions corresponding to plural attachment holes formed on a flange portion **93** of the second casing **9.**

The second casing **9** is provided with a small diameter cylindrical portion **90,** a vertical wall portion **91** extending outward from one end of the small diameter cylindrical portion **90,** a large diameter cylindrical portion **92** connected to the outer end of the vertical wall portion **91,** and the flange portion **93** extending outward from one end of the large diameter cylindrical portion **92.** The flange portion **93** has the plural attachment holes formed at equal intervals.

After the large diameter cylindrical portion **72** of the first casing **7** is inserted inside the thin cylindrical portion **80** so that the bolts **82** protruding from the thin cylindrical portion **80** of the intermediate casing **8** are inserted into the attachment holes on the flange portion **73** of the first casing **7,** nuts **83** are tightened on the bolts **82,** and the intermediate casing **8** is thereby assembled with the first casing **7.** Then, the bolts **82** protruding from the thick cylindrical portion **81** of the intermediate casing **8** are inserted into the attachment holes on the flange portion **93** of the second casing **9,** nuts **83** are tightened on the bolts **82,** and the intermediate casing **8** is thereby assembled with the second casing **9.**

The first casing **7,** the intermediate casing **8** and the second casing **9** are formed of, e.g., a metal such as aluminum. The structure of the first casing **7,** the intermediate casing **8** and the second casing **9** is not limited to that shown in **FIG.1****.**

The pressing member **10** is formed in a cylindrical shape and has a contact surface **10a** perpendicular to the axial direction and in contact with the spring member **11,** and a conical contact surface **10b** in contact with the outer contact surface **5b** of the male rubber unit **5.** The pressing member **10** is formed of, e.g., a metal such as aluminum.

### Assembly process

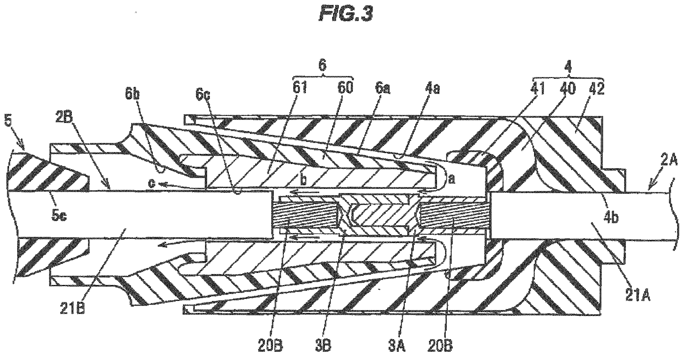

Next, a process of assembling the cable connector **1** will be described in reference to **FIGS.1** to **3****.** **FIG.3** is a cross sectional view showing the main portion to explain a process of assembling the cable connector shown in **FIG.1** **.** In **FIG.3****,** the first casing **7,** the intermediate casing **8,** the second casing **9,** the pressing member **10** and the spring member **11** are not shown.

### (1) Preparatory work

The cable conductors **20A** and **20B** are exposed from ends of the pair of power cables **2A** and **2B** as connection objects by stepwise stripping, and the conductor joining tubes **3A** and **3B** are then connected to the cable conductors **20A** and **20B.** The power cable **2A** is inserted into the female rubber unit **4** so that the female rubber unit **4** is located around the insulation layer **21**A**.** The other power cable **2B** is inserted into the male rubber unit **5** and the epoxy unit **6** so that the male rubber unit **5** and the epoxy unit **6** are located around the insulation layer **21**B**.** The male rubber unit **5** is positioned away from the conductor joining tube **3**B at this stage. Next, the conductor joining tubes **3**A and **3**B are connected to each other.

### (2) Assembling female rubber unit 4 and epoxy unit 6

The first casing **7** is assembled with the intermediate casing **8** by tightening the nuts **83** on the bolts **82** as described above, and the epoxy unit **6** is placed inside the female rubber unit **4.** At this time, the air between the inner contact surface **4**a of the female rubber unit **4** and the female-side contact surface **6a** of the epoxy unit **6** flows into the through-hole **6**c as indicated by a in **FIG.3****,** then flows through the through-hole **6**c as indicated by **b** in **FIG.3****,** and escapes into the atmosphere as indicated by c in **FIG.3****.** The end face **8**a of the thick cylindrical portion **81** of the intermediate casing **8** presses the end face **6**e of the epoxy unit **6,** the inner contact surface **4**a comes into tight contact with the female-side contact surface **6a** by the pressing force, and the end face **4d** of the female rubber unit **4** is pressed against the inner surface of the vertical wall portion **71** of the first casing **7.** A rubber elastic force exerted mainly by the female rubber unit **4** and the epoxy unit **6** acts between the inner contact surface **4a** and the female-side contact surface **6a.**

### (3) Assembling male rubber unit 5

The pressing member **10** and the spring member **11** are arranged on the outer contact surface **5b** of the male rubber unit **5** and the nuts **83** are tightened on the bolts **82** as described above, thereby assembling the intermediate casing **8** with the second casing **9.** A pressing force due to a spring force of the spring member **11** acts between the outer contact surface **5a** of the male rubber unit **5** and the male-side contact surface **6b** of the epoxy unit **6.** Since the contact area between the outer contact surface **5a** and the male-side contact surface **6b** is smaller than that between the inner contact surface **4a** and the female-side contact surface **6a** and an inclination angle of the male-side contact surface **6b** with respect to the central axis is greater than an inclination angle of the female-side contact surface **6a** with respect to the central axis, a void is less likely to be left at the interfacial surface between the outer contact surface **5a** and the male-side contact surface **6b.**

### Functions and effects of the embodiment

The following functions and effects are obtained in the present embodiment.
**(1)** Since a gap formed between the through-hole **6c** and the joint **3**/the power cable **2B** serves as an air escape path to allow the air to escape from the interfacial surface between the female-side contact surface **6a** and the inner contact surface **4a** at the time of bringing the female-side contact surface **6a** of the epoxy unit **6** into contact with the inner contact surface **4a** of the female rubber unit **4,** it is possible to prevent a void from being left at the interfacial surface between the female-side contact surface **6a** and the inner contact surface **4a.**
**(2)** Since the epoxy unit **6** is configured such that the male-side contact surface **6b** has a larger area than the female-side contact surface **6a** and an inclination angle of the male-side contact surface **6b** with respect to the central axis is greater than an inclination angle of the female-side contact surface **6a** with respect to the central axis, it is possible to prevent a void from being left at the interfacial surface between the male-side contact surface **6b** and the outer contact surface **5a.**
**(3)** Since the spring force of the spring member **11** acts on the interfacial surface between the male-side contact surface **6b** and the outer contact surface **5a,** manufacturing error or a change over time can be absorbed by the spring member **11.** Therefore, it is possible to ensure insulation reliability.
**(4)** The cable connector **1** can be downsized in an axial direction and is thus suitable as a cable connector which connects a main power cable to a jumper cable connecting vehicles.

## Claims

1. A cable connector (1), comprising a plurality of insulating components (4, 5, 6) arranged around a joint (3) between cable conductors (20A, 20B) exposed from ends of a pair of power cables (2A, 2B) as connection objects,
wherein the plurality of insulating components comprise a female component (4) comprising a conical inner contact surface (4a) located on the inner side, a male component (5) comprising a conical outer contact surface (5a) located on the outer side, and an intermediate component (6) that is arranged between the male and female components and comprises an insulating portion (60) comprising an insulating material and a through-hole (6c) formed in the center along an axial direction, the insulating portion further comprising a female-side contact surface (6a) in contact with the inner contact surface (4a) and a male-side contact surface (6b) in contact with the outer contact surface (5a), and
wherein the intermediate component is configured such that the male-side contact surface (6b) has a smaller area than the female-side contact surface (6a), the cable connector (1) being **characterized in that** :
a gap formed between the through-hole (6c) and the joint/the power cable serves as an air escape path to allow the air to escape from an interfacial surface between the female-side contact surface (6a) and the inner contact surface (4a) when the female-side contact surface (6a) is brought into contact with the inner contact surface (4a) of the female component.

2. The cable connector (1) according to claim **1,** wherein the intermediate component further comprises a conductive tube (61) arranged inside the insulating portion (60).

3. The cable connector (1) according to claim **1** or **2,** wherein the female and male components comprise mainly a rubber, and
wherein the insulating material of the intermediate component is harder than the rubber.

## Patentansprüche

1. Kabelverbinder (1), umfassend eine Vielzahl von Isolierkomponenten (4, 5, 6) die um eine Verbindung (3) zwischen Kabelleitern (20A, 20B) angeordnet sind, die von den Enden eines Paares von Leistungskabeln (2A, 2B) als Verbindungsobjekte freiliegen,
wobei die Vielzahl von Isolierkomponenten eine weibliche Komponente (4) umfasst, die eine konische innere Kontaktfläche (4a) umfasst, die auf der Innenseite angeordnet ist, eine männliche Komponente (5), die eine konische äußere Kontaktfläche (5a) umfasst, die auf der äußeren Seite angeordnet ist, und eine Zwischenkomponente (6), die zwischen den männlichen und weiblichen Komponenten angeordnet ist und einen Isolierabschnitt (60) umfasst, der ein Isoliermaterial und ein Durchgangsloch (6c) umfasst, das in der Mitte entlang einer axialen Richtung gebildet ist, wobei der Isolierabschnitt ferner eine weibliche Kontaktfläche (6a) in Kontakt mit der inneren Kontaktfläche (4a) und eine männliche Kontaktfläche (6b) in Kontakt mit der äußeren Kontaktfläche (5a) umfasst, und
wobei die Zwischenkomponente so konfiguriert ist, dass die männlich-seitige Kontaktfläche (6b) eine kleinere Fläche als die weiblich-seitige Kontaktfläche (6a) aufweist, wobei der Kabelstecker **dadurch gekennzeichnet ist, dass**:
ein Spalt, der zwischen dem Durchgangsloch (6c) und der Verbindung/dem Stromkabel gebildet ist, als Luftaustrittspfad dient, damit die Luft aus einer Grenzfläche zwischen der weiblichen Kontaktfläche (6a) und der inneren Kontaktfläche (4a) entweichen kann, wenn die weibliche Kontaktfläche (6a) mit der inneren Kontaktfläche (4a) der weiblichen Komponente in Kontakt gebracht wird.

2. Kabelverbinder (1) nach Anspruch 1, wobei die Zwischenkomponente ferner einen leitenden Schlauch (61) umfasst, der innerhalb des Isolierabschnitts (60) angeordnet ist.

3. Kabelverbinder (1) nach Anspruch 1 oder 2, wobei die weiblichen und männlichen Komponenten hauptsächlich einen Gummi umfassen, und
wobei das Isoliermaterial der Zwischenkomponente härter ist als der Gummi.

## Revendications

1. Un connecteur de câble (1), comprenant une pluralité de composants isolants (4, 5, 6) disposés autour d'une jonction (3) entre des conducteurs de câble (20A, 20B) exposés aux extrémités d'une paire de câbles d'alimentation (2A, 2B) en tant qu'objets de connexion,
la pluralité de composants isolants comprenant un composant femelle (4) qui comprend une surface de contact interne conique (4a) située du côté interne, un composant mâle (5) comprenant une surface de contact externe conique (5a) située du côté externe, et un composant intermédiaire (6) qui est disposé entre les composants mâle et femelle et qui comprend une partie isolante (60) comprenant un matériau isolant et un trou traversant (6c) formé au centre le long d'une direction axiale, la partie isolante comprenant en outre une surface de contact (6a) côté femelle en contact avec la surface de contact interne (4a) et une surface de contact (6b) côté mâle en contact avec la surface de contact externe (5a), et
le composant intermédiaire étant configuré de sorte que la surface de contact (6b) côté mâle présente une surface inférieure à la surface de contact (6a) côté femelle, le connecteur de câble (1) étant **caractérisé en ce que** :
un espace formé entre le trou traversant (6c) et la jonction / le câble d'alimentation sert de voie d'évacuation d'air pour permettre à de l'air de s'échapper d'une surface interfaciale entre la surface de contact (6a) côté femelle et la surface de contact interne (4a) lorsque la surface de contact (6a) côté femelle est amenée en contact avec la surface de contact interne (4a) du composant femelle.

2. Le connecteur de câble (1) selon la revendication 1, dans lequel le composant intermédiaire comprend en outre un tube conducteur (61) disposé à l'intérieur de la partie isolante (60).

3. Le connecteur de câble (1) selon la revendication 1 ou la revendication 2, dans lequel les composants femelle et mâle comprennent principalement un caoutchouc, et
dans lequel le matériau isolant du composant intermédiaire est plus dur que le caoutchouc.
